(19) **Europäisches Patentamt**

**European Patent Office**

**Office européen des brevets**

(11) **EP 1 677 449 A2**

(12) **EUROPEAN PATENT APPLICATION**

(43) Date of publication:
05.07.2006 Bulletin 2006/27

(51) Int Cl.:
*H04L 1/18* (2006.01)

(21) Application number: 05028740.8

(22) Date of filing: 30.12.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 31.12.2004 KR 2004118324

(71) Applicants:
• **Samsung Electronics Co., Ltd.**
**Suwon-si, Gyeonggi-Do (KR)**
• **Seoul National University Industry Foundation**
**Seoul 151-050 (KR)**

(72) Inventors:
• **Choi, Sunghyun**
**No.Na-204, Seoul Univ. Gyosu APT.**
**Seoul (KR)**
• **Choi, Youngkyu**

**Gwanak-gu**
**Seoul (KR)**
• **Lee, Yong-Hwan**
**Seoul (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for retransmitting data in a communication system**

(57) In retransmitting data by a transmitter in a mobile communication system, a transmitter sets an allowed number-of-transmissions $C_{tx}$ for an initial transmission and a retransmission of a second data unit based on a first data unit, fragments the first data unit into N second data units, and then initially-transmits or retransmits the N second data units to the receiver within the allowed number-of transmissions $C_{tx}$. The receiver receives the second data units, detects normal receipt or abnormal receipt of the received second data units, and transmits a response to the transmitter according to the detection result.

FIG.6

**Description**

**BACKGROUND OF THE INVENTION**

1. Field of the Invention

The present invention relates generally to an apparatus and method for retransmitting data in the link layer of Internet Protocol (IP)-based wireless data communication system.

2. Description of the Related Art

With the development of communication technologies, communication systems are evolving into advanced systems capable of enabling high-speed data transmission. Particularly, toward the $4^{th}$ generation (4G) communication system, which represents the next generation communication system, world-wide research is being actively conducted to provide users with heterogeneous quality-of-service (QoS) services.

Generally, a data transfer in the wireless channel is quite subject to transmission errors due to thermal noise, interference, and channel fading. In order to reduce the transmission errors, various error control techniques such as forward error correction (FEC) and automatic retransmission request (ARQ) have been adopted. In this application, we are interested in improving ARQ at the IP-level performance point of view.

The ARQ technique can improve reliable transmission remarkably with relatively simple structure, and thus has been employed at both wired and wireless communication system. Using cyclic redundancy check (CRC) codes, if a receiver recognizes that the information was erroneously received, the receiver can notify the transmitter of its erroneous reception in two different ways. The first is that the receiver sends an explicit message so called negative acknowledgement (NAK) to the transmitter. This NAK-based ARQ has been usually adopted in cellular communication system. On the other hand, in the other method, called the acknowledgement (ACK)-based ARQ, the receiver does not send an ACK message when an erroneous reception occurs, and then the transmitter can figure out such an event from the expiration of timer, which is expired if the ACK does not arrive during a certain amount of time. ACK-based ARQ has been used in wired IP network or IEEE 802.11 WLAN.

Separately from the above two different ACK methods, the ARQ can be typically categorized into Stop and Wait (SW) scheme, Go-Back-N (GBN) scheme, and Selective Repeat (SR) scheme depending on whether next packet can be sent before an ACK or NAK message for the previously transmitted packet is returned to the transmitter and whether the retransmission is performed selectively only for the erroneous packets.

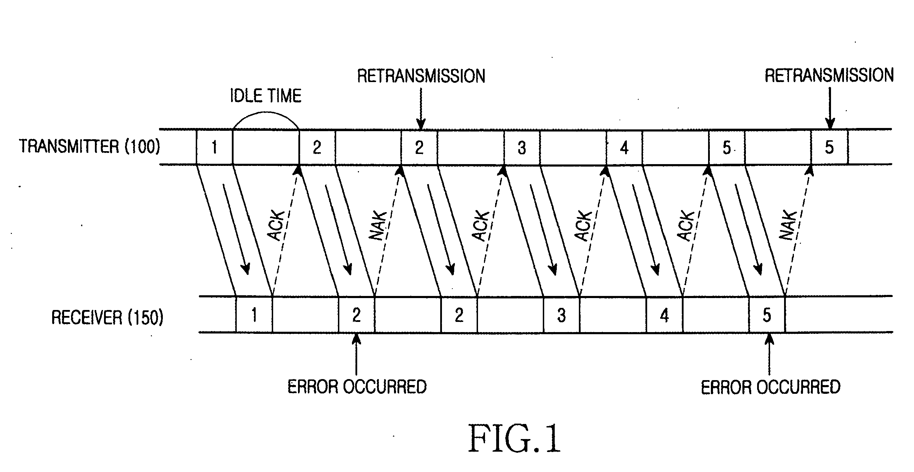

FIG. 1 is a signaling diagram illustrating a data transmission/reception operation according to SW scheme. Referring to FIG. 1, a transmitter 100 transmits one information vector, i.e., data, to a receiver 150, and waits without transmitting the next data, until it receives a response to the transmitted data, i.e., ACK information that indicates normal receipt of the data or NAK information that indicates abnormal receipt of the data.

The receiver 150 receives the data transmitted by transmitter 100, and performs a CRC operation on the received data to determine if there is an error in the received data. If there is no error, the receiver 150 transmits ACK information to the transmitter 100, and if there is an error, the receiver 150 transmits NAK information to the transmitter 100. Upon receiving the ACK information from the receiver 150, the transmitter 100 transmits the next data. However, upon receiving the NAK information from the receiver 150, the transmitter 100 retransmits the previously transmitted data.

As described with reference to FIG. 1, the SW scheme is advantageous in that it is simple in hardware implementation, but disadvantageous in that data transmission delay occurs due to the idle time for which the transmitter 100 must wait until it receives a response to the transmitted data from the receiver 150 after transmitting the data.

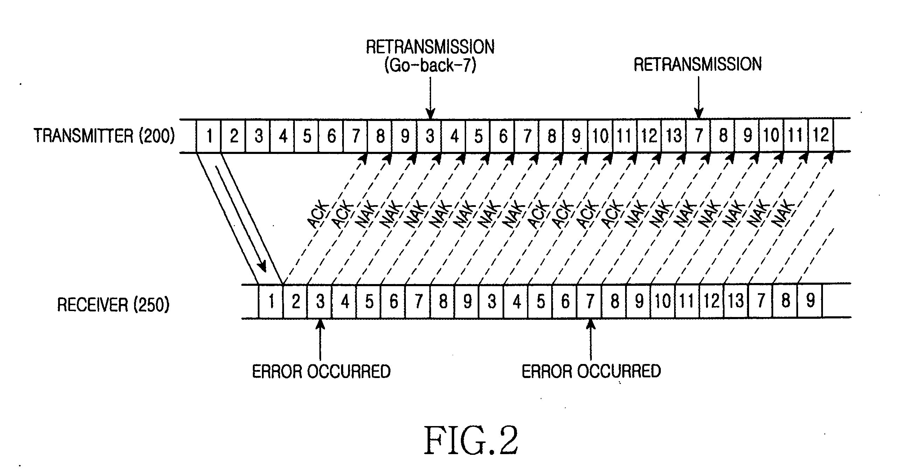

FIG. 2 is a signaling diagram illustrating a data transmission/reception operation according to GBN scheme. Referring to FIG. 2, a transmitter 200 transmits one information vector, i.e., data, to a receiver 250, and then continuously transmits the next data, instead of waiting until it receives a response to the transmitted data, i.e., ACK information or NAK information, from the receiver 250. The time required when the transmitter 200 receives a response to the transmitted data from the receiver 250, after transmitting data, is called a round-trip delay (RTD). During the RTD time, the transmitter 200 transmits the next (N-1) information vectors (data). FIG. 2 illustrates a data transmission/reception operation based on an N=7 GBN scheme.

The receiver 250 receives the data transmitted by transmitter 200, and performs a CRC operation on the received data to determine if there is an error in the received data. If there is no error, the receiver 250 transmits ACK information to the transmitter 200, and if there is an error, the receiver 250 transmits NAK information to the transmitter 200. The receiver 250 does not use (N-1) information vectors continuously received after transmitting the NAK information for the received data, regardless of whether there is an error in the received information vectors. That is, the receiver 250 unconditionally generates NAK information for the data received after transmitting the NAK information, regardless of if there is an error in the received data, and transmits the generated NAK information to the transmitter 200. Upon receiving the NAK information from the receiver 250, the transmitter 200 retransmits the data corresponding to the NAK information, and then continuously retransmits (N-1) information vectors for an RTD time for the retransmitted data.

As described in connection with reference to FIG. 2, the GBN scheme has the problem that when the RTD time is relatively long, even the error-free data may be retransmitted, thereby reducing data transmission efficiency.

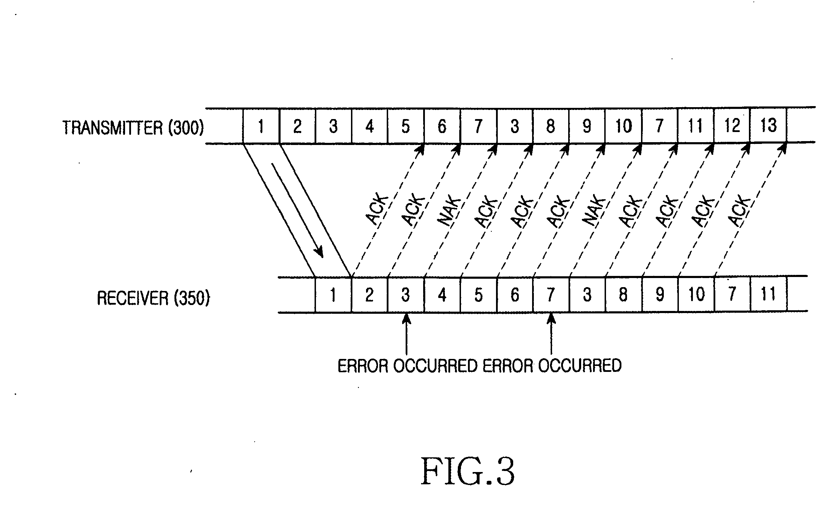

FIG. 3 is a signaling diagram illustrating a data transmission/reception operation according to SR scheme. Referring to FIG. 3, a transmitter 300 continuously transmits a plurality of information vectors, i.e., data, to a receiver 350. Then the receiver 350 performs a CRC operation on the information vectors transmitted by the transmitter 300 to determine if there is an error in the information vectors, and transmits ACK information or NAK information for the corresponding data to the transmitter 300 according to the CRC result. The transmitter 300 retransmits only the data corresponding to the NAK information in the response transmitted from the receiver 350.

As described in connection with FIG. 3, the SR scheme is superior to the SW scheme and the GBN scheme in terms of the data transmission efficiency, but inferior to the SW scheme and the GBN scheme in terms of implementation complexity.

The ARQ is generally a function of Medium Access Control (MAC) layer. Here, the unit of (re)transmission at MAC is typically MAC Protocol Data Unit (MPDU), which comprises of protocol header (including CRC) and payload. In fact, there exist various versions of ARQ scheme as mentioned earlier, but they commonly impose certain limit on the retransmissions of an MPDU in form of maximum retransmission number or maximum life time. If the delivery of an MPDU is not successful until the limit is reached, the retransmission is not allowed any more, and then the MPDU is discarded. Note that the payload of MPDU are a part of MAC Service Data Unit (MSDU) since the size of MPDU in wireless data communication system is designed as small as possible to mitigate the channel fading. Now, the point is that the whole MPDUs should be received error-free at the receiver to reassembly a complete MSDU.

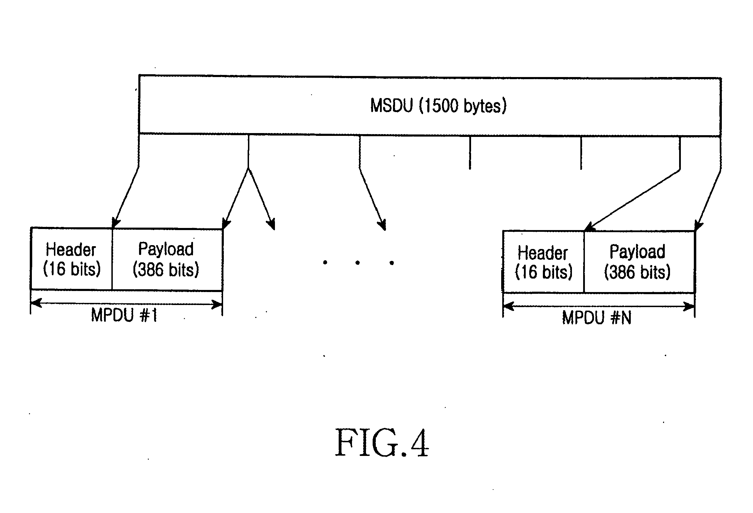

FIG. 4 is a diagram schematically illustrating an MSDU format for a conventional wireless data communication system. In IP-based wireless data communication system, an MSDU can be regarded as an IP datagram with variable size. Referring to FIG. 4, when the MSDU has a size of 1500 bytes, it is fragmented into multiple number of MPDUs, i.e., from MPDU#1 to MPDU#N. As mentioned earlier, each MPDU has a header field and a payload field. For instance, the header and payload have the size of 16 bits and 368 bits, respectively. The MPDU may be designed to have variable size, but for convenience, it is assumed in FIG. 4 that an MPDU has a fixed size.

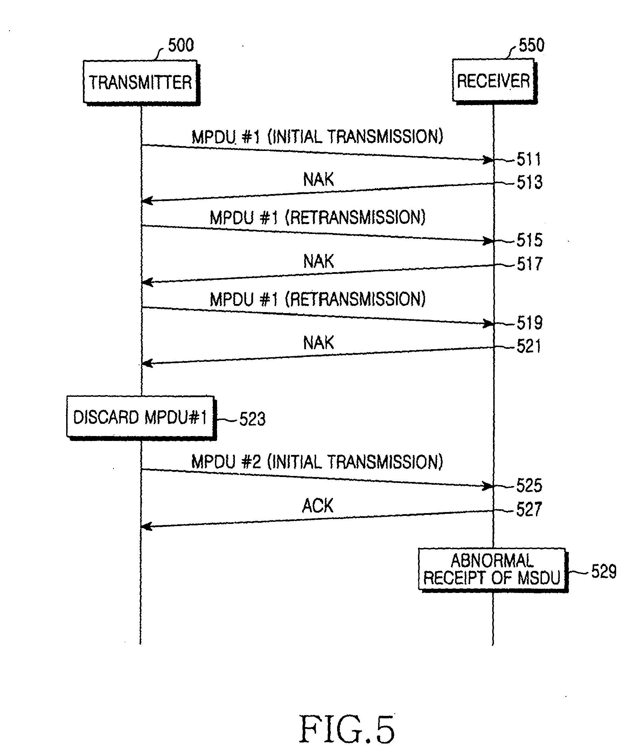

FIG. 5 is a signaling diagram illustrating an ARQ data retransmission operation in a conventional communication system. More specifically, the data retransmission illustrated in FIG. 5 is based on the SW-ARQ scheme described with reference to FIG. 1. It will be assumed in FIG. 5 that one MSDU is fragmented into $N = 2$ MPDUs, i.e., MPDU#1 and MPDU#2, and the maximum transmission limit $M$ allowed per an MPDU is given 3 ($M = 3$). Herein, the maximum transmission limit $M$ includes initial transmission and total retransmissions for an MPDU.

Referring to FIG. 5, a transmitter 500 begins to transmit MPDU#1 to a receiver 550 in step 511. At this time the transmitter 500 increase a counter associated with MPDU#1 by 1. If there is an error in the received MPDU#1, the receiver 550 transmits NAK information indicating erroneous reception of the MPDU#1 to the transmitter 500 in step 513.

Upon receiving the NAK information for the MPDU# 1 from the receiver 550, the transmitter 500 attempts to retransmit the MPDU#1 and checks if the value of counter for MPDU#1 has exceeded the limit, i.e., M = 3. If the value of counter does not exceed the threshold, the transmitter 500 increases the counter value by 1, and then retransmits the MPDU# 1 to the receiver 550 in step 515. Otherwise, no more retransmission is possible, and then the transmitter 500 discards the MPDU#1.

The retransmissions for the MPDU#1 are repeated until the counter reaches the threshold, and then the MPDU#1 is finally discarded at step 523.

After discarding the MPDU#1, the transmitter 500 initially-transmits the next MPDU MPDU#2 to the receiver 550 in step 525. If there is no error in the received MPDU#2, the receiver 550 transmits ACK information to the transmitter 500 indicating that the MPDU#2 is successfully received at step 527. However, even though the MPDU#2 has been successfully received, since the MPDU#1 had not been received, the receiver 550 recognizes at step 529 that the corresponding MSDU cannot be reassembled. As a result, the corresponding MSDU will be considered delivery failure to the upper layer.

If a reception error is assumed to occur with probability $p$ for each MPDU, the failure probability of IP delivery, $P_{fail}$ can be written by Eq. (1).

$$P_{fail} = 1 - (1 - p^M)^N \qquad \ldots \ldots (1)$$

In Eq. (1), M denotes the maximum number of (re)transmissions allowed to an MPDU, and N denotes the number of MPDUs fragmented from an MSDU.

Consequently, if even an MPDU fails to be delivered successfully within M times, the whole MSDU cannot be recovered by the receiver, and thus the performance of data communication is degraded. We would like to emphasize that this phenomenon is commonly found at all the versions of ARQ.

## SUMMARY OF THE INVENTION

In retransmitting data by a transmitter in a mobile communication system, a transmitter sets an allowed number-of-transmissions $C_{tx}$ for an initial transmission and a retransmission of a second data unit based on a first data unit, fragments the first data unit into N second data units, and then initially-transmits or retransmits the N second data units to the receiver within the allowed number-of-transmissions $C_{tx}$. The receiver receives the second data units, detects normal receipt or abnormal receipt of the received second data units, and transmits a response to the transmitter according to the detection result.

## BRIEF DESCRIPTION OF THE DRAWINGS

The above and other objects, features, and advantages of the present invention will become more apparent from the following detailed description when taken in conjunction with the accompanying drawings in which:

FIG. 1 is a signaling diagram illustrating a data transmission/reception operation according to SW scheme;
FIG. 2 is a signaling diagram illustrating a data transmission/reception operation according to GBN scheme;
FIG. 3 is a signaling diagram illustrating a data transmission/reception operation according to SR scheme;
FIG. 4 is a diagram schematically illustrating an MSDU format for a conventional communication system;
FIG. 5 is a signaling diagram illustrating an ARQ data retransmission operation in a conventional communication system;
FIG. 6 is a signaling diagram illustrating a data retransmission operation for an ARQ transmission/reception period in a communication system according to an embodiment of the present invention;
FIG. 7 is a flowchart illustrating a data retransmission operation of an ARQ transmitter in a communication system according to an embodiment of the present invention;
FIG. 8 is a graph illustrating a comparison in data retransmission performance between the conventional ARQ scheme and the ARQ scheme proposed by the present invention in a communication system, for the same MSDU length and the different numbers of retransmissions; and
FIG. 9 is a graph illustrating a comparison in data retransmission performance between the conventional ARQ scheme and the ARQ scheme proposed by the present invention in a communication system, for the same number of retransmissions and the different MSDU lengths.

## DETAILED DESCRIPTION OF EXEMPLARY EMBODIMENT

Exemplary embodiments of the present invention will now be described in detail herein below with reference to the annexed drawings. In the following description, a detailed description of known functions and configurations incorporated herein has been omitted for clarity and conciseness.

The present invention proposes an apparatus and method for retransmitting data according to an Automatic Retransmission reQuest (ARQ) scheme based on a Medium Access Control (MAC) Service Data Unit (MSDU) in a communication system. That is, the present invention proposes a data retransmission apparatus and method for increasing successful delivery probability of an MSDU by managing the maximum transmission limit, not based on a MAC Protocol Data Unit (MPDU), but based on the MSDU, thereby improving the user-perceived QoS. Herein, the maximum transmission limit includes initial transmission and retransmission for an MPDU.

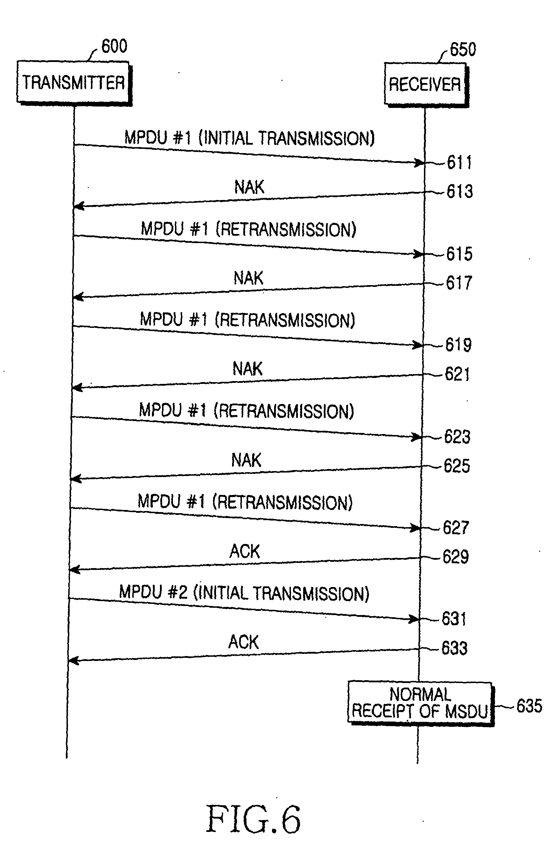

FIG. 6 is a signaling diagram illustrating the ARQ operation according to an embodiment of the present invention. Note that an MPDU for the communication system has the format described with reference to FIG. 4. For the purpose of illustration, the operation presented in FIG. 6 is based on the SW-ARQ scheme shown in FIG. 1. Additionally, an MSDU is assumed to be fragmented into N = 2 MPDUs of MPDU#1 and MPDU#2. Further, as mentioned before, though the ARQ scheme can have several different variants, the present invention will be described using the SW scheme for the sake of simplicity.

While the maximum (re)transmission limit $M$ is given to an MPDU in the prior art section, the present invention proposes that the limit is given to an MSDU and the MPDUs fragmented from that MSDU share the pool of total limit. That is, when an MSDU is fragmented into $N$ MPDUs, the MAC allows the total transmission opportunities of $N \times M$ to an MSDU, instead of allowing $M$ transmission opportunities to per MPDU. Therefore, if there is an MPDU that succeeds in transmission within less than $M$ trials, the residual number of opportunities unused by the successful MPDU can be left to the MPDUs that would failed to be transmitted within $M$ transmission due to temporarily bad channel conditions.

Finally, although the total number of transmission opportunities given to an MSDU is the same as $N \times M$ for both the conventional and our proposed ARQ scheme, the present invention provides higher probability of successful IP delivery than the conventional ARQ scheme.

Referring to FIG. 6, a transmitter 600 begins to transmit the MPDU#1 to a receiver 650 in step 611. After transmitting the MPDU#1, the transmitter 600 decreases a counter $C_{tx}$, which tells how many opportunities are currently remained for the associated MSDU, by 1 ($C_{tx} = C_{tx}$-1). Herein, the counter $C_{tx}$ for the currently remaining transmission number is initially set to $N \times M$ as described above. If there is an error in the received MPDU#1, the receiver 650 transmits NAK indicating erroneous reception of the MPDU#1 to the transmitter 600 in step 613.

Upon receiving the NAK for the MPDU#1 from the receiver 650, the transmitter 600 does not change $S_{tx}$ for counting the number of MPDUs which are successfully received. Herein, the value of $S_{tx}$ is initially set to '0'. Only when a difference between the number of MPDUs fragmented from the MSDU and $S_{tx}$ indicating the number of transmission-succeeded MPDUs is less than $C_{tx}$ for the allowed transmission number, the transmitter 600 determines retransmission of the MPDU# 1 and retransmits the MPDU#1 to the receiver 650 in step 615.

After retransmitting the MPDU#1, the transmitter 600 decreases a value of the counter parameter $C_{tx}$ for the MSDU-based allowed transmission number by 1 ($C_{tx}=C_{tx}$-1). However, if the difference between the number N of MPDUs fragmented from the MSDU and a value of the parameter $S_{tx}$ indicating the number of transmission-succeeded MPDUs is greater than or equal to a value of the counter parameter $C_{tx}$ for the allowed transmission number, the transmitter 600 discards all of the remaining MPDUs, because normal MSDU reception is impossible even though retransmission on the MPDU#1 is possible, indicating that the retransmission is meaningless.

Similarly, the receiver 650 performs a CRC operation on the MPDU# 1 retransmitted by the transmitter 600 to determine if there is an error in the received MPDU#1. If there is an error in the received MPDU#1, the receiver 650 transmits NAK information indicating abnormal receipt of the MPDU#1 to the transmitter 600 in step 617.

Similarly, in an operation of steps 619 through 627, only when the difference between the number N of MPDUs fragmented from the MSDU and a value of the parameter $S_{tx}$ indicating the number of transmission-succeeded MPDUs is less than a value of the counter parameter $C_{tx}$ for the allowed transmission number, the transmitter 600 determines retransmission of the MPDU#1, and repeats the retransmission in steps 619, 623, and 627, until the receiver 650 successfully receives the MPDU#1.

After retransmitting the MPDU#1, the transmitter 600 decreases a value of the counter parameter $C_{tx}$ for the MSDU-based allowed transmission number by 1 ($C_{tx}=C_{tx}$-1).

However, when the difference between the number N of MPDUs fragmented from the MSDU and a value of the parameter $S_{tx}$ indicating the number of transmission-succeeded MPDUs is greater than or equal to a value of the counter parameter $C_{tx}$ for the allowed transmission number, the transmitter 600 discards all of the remaining MPDUs, because normal MSDU reception is impossible even though retransmission on the MPDU#1 is possible, indicating that the retransmission is meaningless.

In addition, the receiver 650 performs a CRC operation on the MPDU# 1 retransmitted from the transmitter 600 to determine if there is an error in the received MPDU#1. If there is an error in the received MPDU#1, the receiver 650 transmits NAK information indicating abnormal receipt of the MPDU#1 to the transmitter 600 in steps 621 and 625. However, if there is no error in the received MPDU#1, the receiver 650 transmits ACK information indicating normal receipt of the MPDU#1 to the transmitter 600 in step 629. Although the MPDU#1 is discarded as it has failed in transmission within the allowed transmission number M (M=3) supportable per MPDU in the conventional ARQ scheme, the MPDU#1 can be normally transmitted in the MSDU-based ARQ scheme proposed by the present invention.

Because the MPDU#1 has been normally transmitted, the transmitter 600 increases a value of the parameter $S_{tx}$ indicating the number of transmission-succeeded MPDUs ($S_{tx}=S_{tx}$+1), and only when the difference between the number N of MPDUs fragmented from the MSDU and a value of the parameter $S_{tx}$ indicating the number of transmission-succeeded MPDUs is less than a value of the counter parameter $C_{tx}$ for the allowed transmission number, the transmitter 600 initially-transmits the next MPDU MPDU#2 to the receiver 650 in step 631.

After transmitting the MPDU#2, the transmitter 600 decreases a value of the counter parameter $C_{tx}$ for the MSDU-based allowed transmission number by 1 ($C_{tx}=C_{tx}$-1). Of course, if the difference between the number N of MPDUs fragmented from the MSDU and a value of the parameter $S_{tx}$ indicating the number of transmission-succeeded MPDUs is greater than or equal to a value of the counter parameter $C_{tx}$ for the allowed transmission number, the transmitter 600 discards all of the remaining MPDUs, because normal MSDU reception is impossible even though initial transmission on the MPDU#2 is possible, indicating that the additional transmission is meaningless.

The receiver 650 performs a CRC operation on the MPDU#2 received from the transmitter 600 to determine if there is an error in the received MPDU#2. If there is no error in the received MPDU#2, the receiver 650 transmits ACK information indicating normal receipt of the MPDU#2 to the transmitter 600 in step 633.

Because the MPDU#1 and the MPDU#2 have been normally received within the MSDU-based allowed transmission number of $N \times M$, the receiver 650 determines in step 635 that the corresponding MSDU has been normally received. That is, the receiver 600 generates the original MSDU by reassembling the received MPDUs MPDU#1 and MPDU#2, resulting in MSDU transmission success of the upper layer. If it is assumed that an error occurs in the MPDU every transmission at a probability p in a wireless channel environment, a transmission failure probability $P_{fail}$ of the MSDU can be finally defined as shown in Equation (2).

$$P_{fail} = 1 - \sum_{i=N}^{N \times M} \binom{i-1}{N-1} (1-p)^N p^{i-N} \qquad \dots (2)$$

In Equation (2), M denotes the allowed number of transmissions supportable per MPDU in the general ARQ scheme, and N denotes the number of MPDUs fragmented from one MSDU.

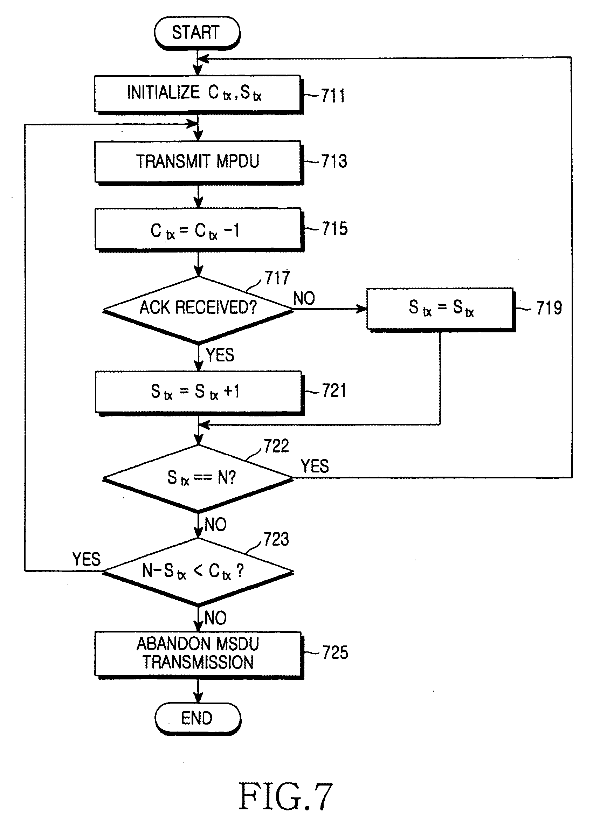

FIG. 7 is a flowchart illustrating a data retransmission operation of an ARQ transmitter in a communication system according to an embodiment of the present invention. Referring to FIG. 7, in step 711, a transmitter fragments an MSDU received from an upper layer into a plurality of, for example, N MPDUs, and initializes a counter parameter $C_{tx}$ for counting the allowed transmission number for MSDU-based retransmission and a parameter $S_{tx}$ indicating the number of transmission-succeeded MPDUs (or normally-transmitted MPDUs). The counter parameter $C_{tx}$ for the allowed transmission number, as described above, is initialized to NxM, taking into consideration even the resource efficiency with the ARQ retransmission operation in the conventional communication system. Although the counter parameter $C_{tx}$ for the allowed transmission number should not necessarily be initialized to $N \times M$, it is initialized to $N \times M$ in order to maximize the retransmission efficiency with the use of the same amount of resources as that used when the ARQ retransmission operation is performed in the conventional communication system. In addition, the parameter $S_{tx}$ indicating the number of transmission-succeeded MPDUs is initialized to '0'.

In step 713, the transmitter transmits a corresponding one of the fragmented N MPDUs to a receiver. Herein, the MPDU transmitted to the receiver can be either an initially-transmitted MPDU or a retransmitted MPDU. In step 715, the transmitter decreases a value of the counter parameter $C_{tx}$ for the allowed transmission number by 1 ($C_{tx}=C_{tx}-1$). In step 717, the transmitter determines if ACK information for the transmitted MPDU is received. If the ACK information for the transmitted MPDU is not received, the transmitter keeps a value of the parameter $S_{tx}$ indicating the number of transmission-succeeded MPDUs in step 719, because the transmitted MPDU has failed in transmission.

However, if it is determined in step 717 that the ACK information for the transmitted MPDU is received from the receiver, the transmitter increases a value of the parameter $S_{tx}$ indicating the number of transmission-succeeded MPDUs by 1 ($S_{tx}=S_{tx}+1$) in step 721, because the transmitted MPDU has succeeded in transmission.

In step 722, the transmitter determines if the parameter $S_{tx}$ indicating the number of transmission-succeeded MPDUs is equal to the number N of the MPDUs fragmented from the MSDU. If the parameter $S_{tx}$ indicating the number of transmission-succeeded MPDUs is equal to the number N of the MPDUs fragmented from the MSDU, indicating completion of the transmission of the MSDU, the transmitter returns to step 711. However, it is determined in step 722 that the parameter $S_{tx}$ indicating the number of transmission-succeeded MPDUs is not equal to the number N of the MPDUs fragmented from the MSDU, the transmitter proceeds to step 723.

In step 723, the transmitter determines if a difference between the number N of MPDUs fragmented from the MSDU and a value of the parameter $S_{tx}$ indicating the number of transmission-succeeded MPDUs is less than a value of the counter parameter $C_{tx}$ for the allowed transmission number ($N-S_{tx} < C_{tx}$). If the difference between the number N of MPDUs fragmented from the MSDU and a value of the parameter $S_{tx}$ indicating the number of transmission-succeeded MPDUs is less than a value of the counter parameter $C_{tx}$ for the allowed transmission number, the transmitter returns to step 713.

However, if the difference between the number N of MPDUs fragmented from the MSDU and a value of the parameter $S_{tx}$ indicating the number of transmission-succeeded MPDUs is greater than or equal to a value of the counter parameter $C_{tx}$ for the allowed transmission number, the transmitter abandons the transmission of the MSDU in step 725, and then ends the data retransmission operation.

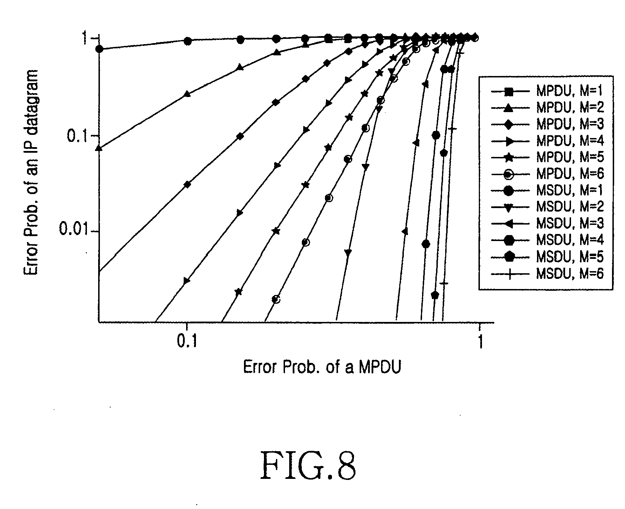

FIG. 8 is a graph illustrating a comparison in data retransmission performance between the conventional ARQ scheme and the ARQ scheme proposed by the present invention in a communication system, for the same MSDU length and the different numbers of retransmissions. However, before a description of FIG. 8 is given, it will be assumed that the communication system is an Internet protocol (IP)-based wireless network system. Therefore, it should be noted that because the MSDU is an IP datagram, the MSDU is illustrated as an IP datagram in FIG. 8. Herein, the IP datagram is a signal generated by fragmenting a signal transmitted/received in the wireless network system into packets.

Referring to FIG. 8, a horizontal axis represents a transmission failure probability of an MPDU due to a channel error when the MPDU is actually transmitted in a physical layer, and a vertical axis represents a transmission failure probability of an IP datagram. It can be understood from FIG. 8 that an increase in the allowed transmission number M reduces the transmission failure probability of the IP datagram for both the conventional ARQ scheme and the ARQ scheme proposed by the present invention, but the ARQ scheme proposed by the present invention is much lower than the conventional ARQ scheme in terms of the transmission failure probability of the IP datagram. That is, for the same data retransmission performance, the ARQ scheme proposed by the present invention, compared with the conventional ARQ scheme, can set the allowed transmission number M to a less value, thereby increasing resource efficiency.

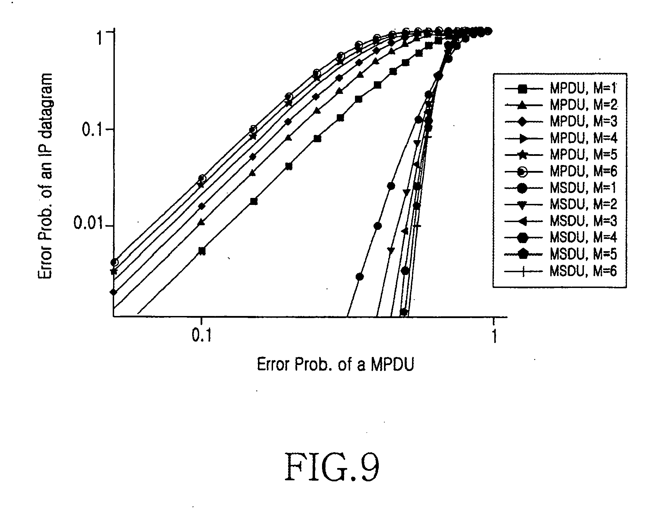

FIG. 9 is a graph illustrating a comparison in data retransmission performance between the conventional ARQ scheme and the ARQ scheme proposed by the present invention in a communication system, for the same number of retransmissions and the different MSDU lengths. However, before a description of FIG. 9 is given, it will be assumed that the communication system is an IP-based wireless network system. Therefore, it should be noted that because the MSDU is an IP datagram, the MSDU is illustrated as an IP datagram in FIG. 9.

Referring to FIG. 9, a horizontal axis represents a transmission failure probability of an MPDU due to a channel error when the MPDU is actually transmitted in a physical layer, and a vertical axis represents a transmission failure probability of an IP datagram. It can be understood from FIG. 9 that an increase in the number N of MPDUs fragmented from one MSDU reduces the transmission failure probability of the IP datagram for both the conventional ARQ scheme and the ARQ scheme proposed by the present invention, but the ARQ scheme proposed by the present invention is much lower than the conventional ARQ scheme in terms of the transmission failure probability of the IP datagram. In many cases, in the IP-based wireless network system, because a length of a packet is relatively long, the use of the ARQ scheme proposed by the present invention contributes to performance improvement.

As can be understood from the foregoing description, the present invention performs an ARQ data retransmission operation not based on the MPDU but based on the MSDU in the communication system, thereby minimizing the MSDU transmission failure probability and improving the full performance of the communication system.

While the present invention has been shown and described with reference to certain preferred embodiments thereof, it will be understood by those skilled in the art that various changes in form and details may be made therein without departing from the spirit and scope of the present invention as defined by the appended claims.

## Claims

1.  A method for retransmitting data by a transmitter in a communication system, the method comprising the steps of:

    setting an allowed number-of-transmissions $C_{tx}$ for an initial transmission and a retransmission of a second data unit based on a first data unit;
    if there is a first data unit to be transmitted to a receiver, fragmenting the first data unit into N second data units; and
    performing one of initially-transmitting and retransmitting the N second data units to the receiver within the allowed number-of-transmissions $C_{tx}$.

2.  The method of claim 1, wherein the step of performing one of initially-transmitting and retransmitting the N second data units to the receiver within the allowed number-of transmissions $C_{tx}$ comprises the step of:

    performing one of initially-transmitting and retransmitting the N second data units to the receiver within the allowed number-of-transmissions $C_{tx}$ exclusively when a residual allowed number-of-transmissions determined by excluding a number of initial transmissions or retransmissions from the allowed number-of-transmissions $C_{tx}$ for each of the N second data units exceeds a number of transmission-failed second data units and a number of second data units to be initial-transmitted, among the N second data units.

3.  The method of claim 2, further comprising the step of stopping transmission of the first data unit, if the residual allowed number-of-transmissions determined by excluding the number of the initial transmissions or the retransmissions from the allowed number-of-transmissions $C_{tx}$ for each of the N second data units is less than or equal to the number of transmission-failed second data units and the number of second data units to be initial-transmitted, among the N second data units.

4.  The method of claim 3, wherein the first data unit is a Medium Access Control (MAC) Service Data Unit (MSDU).

5.  The method of claim 3, wherein the second data unit is a Medium Access Control (MAC) Protocol Data Unit (MPDU).

6.  A method for retransmitting data by a transmitter in a communication system, the method comprising the steps of:

    initializing an allowed number-of-transmissions $C_{tx}$ for an initial transmission and a retransmission of a second data unit based on a first data unit and a number $S_{tx}$ of transmission-succeeded second data units;

fragmenting the first data unit into N second data units;

initially-transmitting a particular second data unit among the N second data units to a receiver;

decreasing the allowed number-of-transmissions $C_{tx}$ by one;

keeping a current value of the number $S_{tx}$ of transmission-succeeded second data units, upon detecting abnormal receipt of the initially-transmitted second data unit at the receiver; and

retransmitting the abnormally received second data unit to the receiver exclusively when a difference between the N the second data units fragmented from the first data unit and the number $S_{tx}$ of transmission-succeeded second data units is less than the allowed number-of-transmissions $C_{tx}$.

7. The method of claim 6, further comprising the step of stopping transmission of the first data unit, if the difference between the N second data units fragmented from the first data unit and the number $S_{tx}$ of transmission-succeeded second data units is greater than or equal to the allowed number-of-transmissions $C_{tx}$.

8. The method of claim 6, further comprising the steps of:

increasing the number $S_{tx}$ of transmission-succeeded second data units by one, upon detecting a normal receipt of the initially-transmitted second data unit at the receiver; and

initially-transmitting a second data unit being different from the initial-transmitted second data unit to the receiver exclusively, when the difference between the N second data units fragmented from the first data unit and the number $S_{tx}$ of transmission-succeeded second data units is less than the allowed number-of-transmissions $C_{tx}$.

9. The method of claim 7, wherein the first data unit is a Medium Access Control (MAC) Service Data Unit (MSDU).

10. The method of claim 7, wherein the second data unit is a Medium Access Control (MAC) Protocol Data Unit (MPDU).

11. The method of claim 8, further comprising the step of stopping transmission of the first data unit, if the difference between the N second data units fragmented from the first data unit and the number $S_{tx}$ of transmission-succeeded second data units is greater than or equal to the allowed number-of transmissions $C_{tx}$.

12. The method of claim 11, wherein the first data unit is a Medium Access Control (MAC) Service Data Unit (MSDU).

13. The method of claim 11, wherein the second data unit is a Medium Access Control (MAC) Protocol Data Unit (MPDU).

14. An apparatus for retransmitting data in a communication system, the apparatus comprising:

a receiver; and

a transmitter for setting an allowed number-of transmissions $C_{tx}$ for an initial transmission and a retransmission of a second data unit based on a first data unit, fragmenting the first data unit into N second data units, and performing one of initially-transmitting and retransmitting the N second data units to the receiver within the allowed number-of-transmissions $C_{tx}$,

wherein the receiver receives the second data units, detects one of a normal receipt and an abnormal receipt of the received second data units, and transmits a response to the transmitter according to the detection result.

15. The apparatus of claim 14, wherein the transmitter performs one of initially-transmitting and retransmitting the N second data units to the receiver within the allowed number-of-transmissions $C_{tx}$ exclusively, when a residual allowed number-of-transmissions determined by excluding a number of initial transmissions or retransmissions from the allowed number-of-transmissions $C_{tx}$ for each of the N second data units exceeds a number of transmission-failed second data units and a number of second data units to be initial-transmitted, among the N second data units.

16. The apparatus of claim 15, wherein the transmitter stops transmission of the first data unit, if the residual allowed number-of-transmissions is less than or equal to the number of transmission-failed second data units and the number of second data units to be initial-transmitted, among the N second data units.

17. The apparatus of claim 16, wherein the first data unit is a Medium Access Control (MAC) Service Data Unit (MSDU).

18. The apparatus of claim 16, wherein the second data unit is a Medium Access Control (MAC) Protocol Data Unit (MPDU).

19. An apparatus for retransmitting data in a communication system, the apparatus comprising:

a receiver; and
a transmitter for initializing an allowed number-of-transmissions $C_{tx}$ for an initial transmission and a retransmission of a second data unit based on a first data unit and a number $S_{tx}$ of transmission-succeeded second data units, fragmenting the first data unit into N second data units, initial-transmitting a particular second data unit among the N second data units to the receiver, decreasing the allowed number-of-transmissions $C_{tx}$ by one, keeping a current value of the number $S_{tx}$ of transmission-succeeded second data units, upon detecting abnormal receipt of the initial-transmitted second data unit at the receiver, and retransmitting the abnormally received second data unit to the receiver exclusively, when a difference between the N of the second data units fragmented from the first data unit and the number $S_{tx}$ of transmission-succeeded second data units is less than the allowed number-of-transmissions $C_{tx}$,

wherein the receiver receives the second data units, detects one of a normal receipt and an abnormal receipt of the received second data units, and transmits a response to the transmitter according to the detection result.

20. The apparatus of claim 19, wherein the transmitter stops transmission of the first data unit if the difference between the N second data units fragmented from the first data unit and the number $S_{tx}$ of transmission-succeeded second data units is greater than or equal to the allowed number-of transmissions $C_{tx}$.

21. The apparatus of claim 19, wherein the transmitter increases the number $S_{tx}$ of transmission-succeeded second data units by one, upon detecting the normal receipt of the initial-transmitted second data unit at the receiver, and initially-transmits a second data unit being different from the initially-transmitted second data unit to the receiver exclusively, when the difference between the N second data units fragmented from the first data unit and the number $S_{tx}$ of transmission-succeeded second data units is less than the allowed number-of-transmissions $C_{tx}$.

22. The apparatus of claim 20, wherein the first data unit is a Medium Access Control (MAC) Service Data Unit (MSDU).

23. The apparatus of claim 20, wherein the second data unit is a Medium Access Control (MAC) Protocol Data Unit (MPDU).

24. The apparatus of claim 21, wherein the transmitter stops transmission of the first data unit, if the difference between the N second data units fragmented from the first data unit and the number $S_{tx}$ of transmission-succeeded second data units is greater than or equal to the allowed number-of transmissions $C_{tx}$.

25. The apparatus of claim 24, wherein the first data unit is a Medium Access Control (MAC) Service Data Unit (MSDU).

26. The apparatus of claim 24, wherein the second data unit is a Medium Access Control (MAC) Protocol Data Unit (MPDU).

FIG.1

FIG.2

FIG.3

MSDU (1500 bytes)

MPDU #N
Header (16 bits)
Payload (386 bits)

MPDU #1
Header (16 bits)
Payload (386 bits)

FIG.4

TRANSMITTER ~500

RECEIVER ~550

MPDU #1 (INITIAL TRANSMISSION) ~511

NAK ~513

MPDU #1 (RETRANSMISSION) ~515

NAK ~517

MPDU #1 (RETRANSMISSION) ~519

NAK ~521

DISCARD MPDU#1 ~523

MPDU #2 (INITIAL TRANSMISSION) ~525

ACK ~527

ABNORMAL RECEIPT OF MSDU ~529

FIG.5

FIG.6

FIG.7

FIG.8

FIG.9